# EUROPEAN PATENT SPECIFICATION

(11) **EP 0 865 612 B1**
(45) Date of publication and mention of the grant of the patent: **05.06.2002**
(21) Application number: 96943117.0
(22) Date of filing: 06.12.1996
(51) Int. Cl.: G01V 1/44

(54) **USE OF ACOUSTIC EMISSION IN ROCK FORMATION ANALYSIS**
VERWENDUNG VON AKUSTISCHER EMISSION FÜR DIE ANALYSE VON GESTEINSFORMATIONEN
UTILISATION D'EMISSION ACOUSTIQUE DANS L'ANALYSE DE FORMATIONS ROCHEUSES

(30) Priority: 07.12.1995 EP 95203401
(43) Date of publication of application: 23.09.1998
(73) Proprietor: SHELL INTERNATIONALE RESEARCH MAATSCHAPPIJ B.V., 2596 HR Den Haag (NL)
(72) Inventor: EMMEN, Jacobus, Hendrikus, Petrus, Maria, NL-2288 GD Rijswijk (NL); KENTER, Cornelis, Jan, NL-2288 GD Rijswijk (NL)
(86) International application number: EP9605610
(87) International publication number: WO9721116

(56) References cited:
- EP-A- 0 505 276
- US-A- 4 744 245
- US-A- 5 372 038
- GEOPHYSICS, vol. 54, no. 4, April 1989, TULSA OKLAHOMA, pages 508-513, XP002029743 NAGANO ET AL.: "Automatic algorithm for triaxial hodogram source location in downhole acoustic emission measurement"

## Description

The invention relates to a method of determining a characteristic of a rock formation surrounding a borehole containing a fluid. The design of a wellbore generally requires knowledge of rock characteristics such as the formation strength, i.e. the maximum pressure the drilled formation can withstand without failing. Several procedures have been used to estimate the formation strength during the drilling phase of a wellbore, which procedures generally involve a stepwise or continuous pressurisation of a short open-hole section directly below the lowest casing shoe. The level of pressurisation varies from one type of test to the other but is normally intended to stay below the formation break-down pressure as fracturing the formation would be detrimental to the drilling process. Assessment of the formation strength can be done by performing a leak-off test which involves increasing the borehole pressure up to the leak-off pressure identified as the pressure at which a plot of the wellhead pressure versus injected wellbore fluid volume becomes non-linear. The onset of non-linearity is taken as an indication of the occurrence of critical mechanical phenomena such as the development of microcracks in the formation or significant wellbore deformation indicating impending formation failure. The maximum allowable drilling fluid pressure gradient is then determined from the leak-off pressure. However, the onset of non-linearity in the fluid pressure may equally well be caused by fluid related phenomena such as fluid loss into the formation or fluid flow around a poorly cemented casing shoe. Furthermore, the leak-off test results are highly dependent on the way the test is executed, and the accuracy obtained may not be sufficient for wells drilled in formations with a narrow margin between pore pressure and formation break-down pressure particularly in high pressure formations.

Nagano et al, "Automatic algorithm for triaxial hodogram source location in downhole acoustic emission measurement", Geophysics Liv (4), 1989, pp 508-513, discloses the use of acoustic emission detection in geotechnical areas in order to monitor subsurface crack extensions.

EP-A-0 505 276 and US-A-5,372,038 disclose a method of measuring microseismic quantities induced by injection of a fluid into a well.

US-A-4,744,245 discloses a method of determining the direction of a hydraulically induced fracture, wherein the rock is heated and the acoustic emission from the heated rock is determined.

It is an object of the invention to overcome the drawbacks of the known method and to provide an improved method of determining a mechanical characteristic of a rock formation surrounding a borehole containing a fluid.

In accordance with the invention there is provided a method of determining a characteristic of a material selected from rock formation and cement, said material surrounding a borehole containing a fluid, the method comprising:
- positioning an acoustic sensor at a selected position in the borehole, the acoustic sensor being suitable to provide signals representing acoustic emission from said material;
- applying a selected pressure to the fluid thereby inducing mechanical stresses in said material, said stresses inducing acoustic emission from said material;
- inducing the sensor to detect the acoustic emission and to provide a signal representing the acoustic emission; and
- determining the characteristic from said signal and from the pressure applied to the fluid, characterized in that said selected pressure is applied to the fluid in the course of a leak-off test whereby fluid is pumped into the borehole and the time evolution of the pressure in the borehole is monitored during and after pumping, and wherein the selected pressure forms the leak-off pressure defined as the pressure at which a plot of the wellhead pressure versus injected fluid volume becomes non-linear.

In a preferred embodiment of the invention, said characteristic forms a mechanical characteristic which is used to assess whether or not the material is cracked.

Suitably said characteristic forms at least one of the group of parameters including the rock strength, the rock type, the rock porosity, the formation leak-off pressure, the formation break-down pressure, an in-situ rock stress and the distinction between cement and rock.

Acoustic energy losses are minimised by positioning the acoustic sensor in or close to an open lower part of the borehole so as to determine the mechanical characteristic of the rock formation surrounding said open lower part of the borehole.

The method of the invention is suitably applied during drilling of the borehole and wherein the upper part of the borehole is provided with a casing.

To determine the maximum allowable fluid pressure gradient during drilling of the borehole, said selected pressure is applied to the fluid in the course of a leak-off test whereby fluid is pumped into the borehole and the time evolution of the pressure in the borehole is monitored during and after pumping. The fluid can be pumped into the borehole for example in incremental steps or continuously. Furthermore, said selected pressure can be applied during a single loading cycle or during cyclic loading of the borehole.

The step of determining the characteristic from said signal preferably comprises determining the characteristic from at least one of the amplitude of the signal, the energy of the signal, the duration of the signal, the number of times the signal exceeds a selected threshold and the amplitude distribution of the signal (e.g. B-value).

Laboratory analysis of the measurement results is suitably carried out by storing the selected signal and a record of the fluid pressure as a function of time, and determining the rock mechanical characteristic from a comparison between the stored signal and the fluid pressure as a function of time.

The invention will be illustrated in more detail in the following example and with reference to the appended drawings in which
Fig. 1 schematically shows an example of an acoustic emission record as measured in operation of the invention;
Fig. 2 shows an example of a diagram of borehole pressure and cumulative acoustic hits as a function of time; and
Fig. 3 shows an example of a diagram of borehole pressure and acoustic hit rate as a function of time.

### Example

A field test was carried out in an open-hole section of a wellbore at a depth of 2325 m, below the 13 3/8" (0.34 m) casing installed in the wellbore. The equipment containing the acoustic sensor was accommodated in a 10 m vertical section drilled below the 13 3/8" (0.34 m) casing shoe. The test equipment included a downhole 1 11/16" (0.043 m) sonic logging tool which was slightly modified to disable the transmitter and one of the two hydrophones so as to allow the tool to operate in a continuous listening mode, two pressure gauges located in the wellbore, and a LOCAN 320 acoustic emission acquisition system located at surface and being in communication with the sonic logging tool via a wireline (LOCAN is a trademark). The LOCAN 320 system was fine-tuned at the well site and with the sonic logging tool in the wellbore, with the acoustic threshold set slightly above the background noise level as measured by the LOCAN 320 and the internal gain set according to the manufacturer's recommendations. During the test the following settings were found satisfactory:
- downhole pre-amplification gain: 10,000 (80 dB)
- LOCAN 320 internal amplification gain: 10 (20 dB)
- threshold setting for background noise: 49 dB (30 mV)

Although the settings depend on the local conditions, e.g. formation characteristics and depth, in order to optimise the use of the Locan 320 system the internal gain should in general be below 45 dB and the magnitude of the sum of the internal gain and the threshold should be between 60-70 dB.

The testing programme included three main phases:
1) A conventional leak-off test during which volumes of 0.016 m³ drilling fluid were injected in incremental steps in the wellbore at a rate of 0.04 m³/min, each incremental step followed by monitoring the fluid pressure for 2 minutes. From the pressure record the leak-off pressure was derived.
2) The fluid pressure was further increased by continued incremental fluid injection in the wellbore until failure of the rock formation occurred. The fluid pressure at failure is referred to as the break-down pressure.
3) Subsequently a series of fluid injection/shut-in cycles was performed to derive the minimum in-situ stress. These cycles were aimed at propagating the created fracture(s) away from the wellbore and at measuring the fluid pressures at opening and closing the fracture(s). The fracture propagation cycles were carried out using an injection rate of 0.16 m³/min. This rate was maintained as constant as possible to allow fracture reopening to be determined. Injection was continued until relatively stable fracture propagation was observed. Each injection step was followed by a shut-in period and the pressure decline was observed.

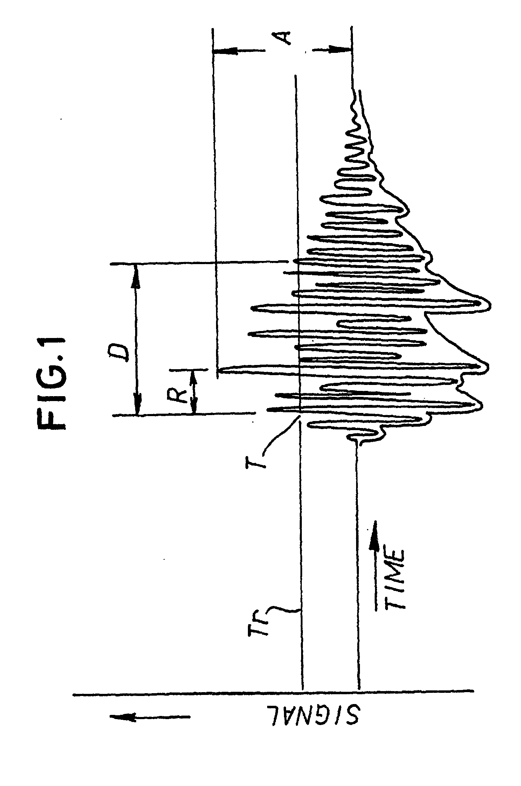

In Fig. 1 is shown an example of acoustic emission hit as determined in operation of the invention. The Locan 320 system identifies each acoustic emission hit and determines the following characteristics thereof.
(i) Time of occurrence T, which is the time at which the first signal of an acoustic hit emission crosses a signal threshold Tr.
(ii) Counts, which is the number of rising signal threshold crossings in each acoustic emission hit.
(iii) Amplitude A, which is the peak crossing during an acoustic emission hit.
(iv) Energy, which is the measured area under the rectified signal envelope within the time frame from first threshold crossing. The measured value is directly proportional to the system amplification.
(v) Duration D, which is the time between the first and last threshold crossing.
(vi) Rise-time R, which is the time from the first threshold crossing to the peak crossing.
(vii) Counts to peak, which is the number of threshold crossings from the first crossing to the peak crossing.

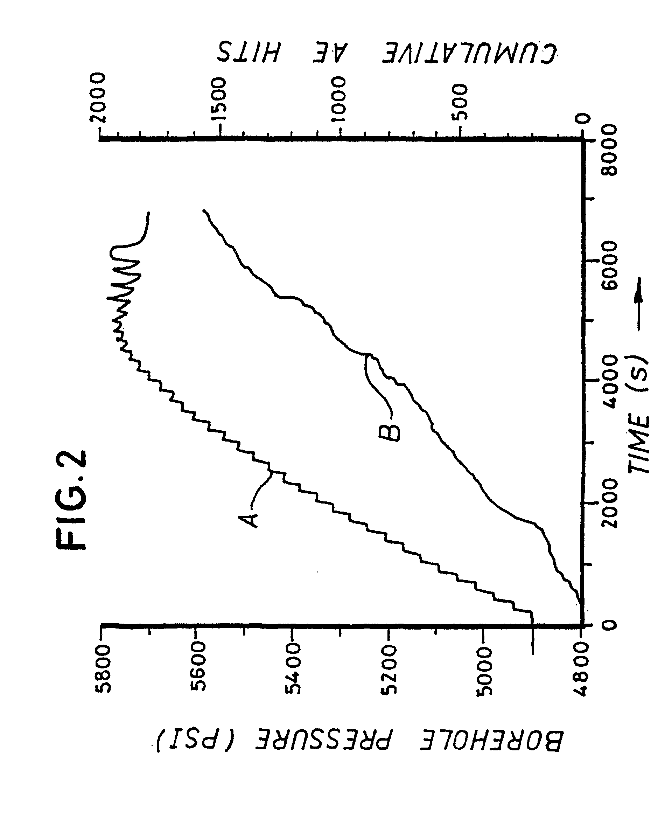

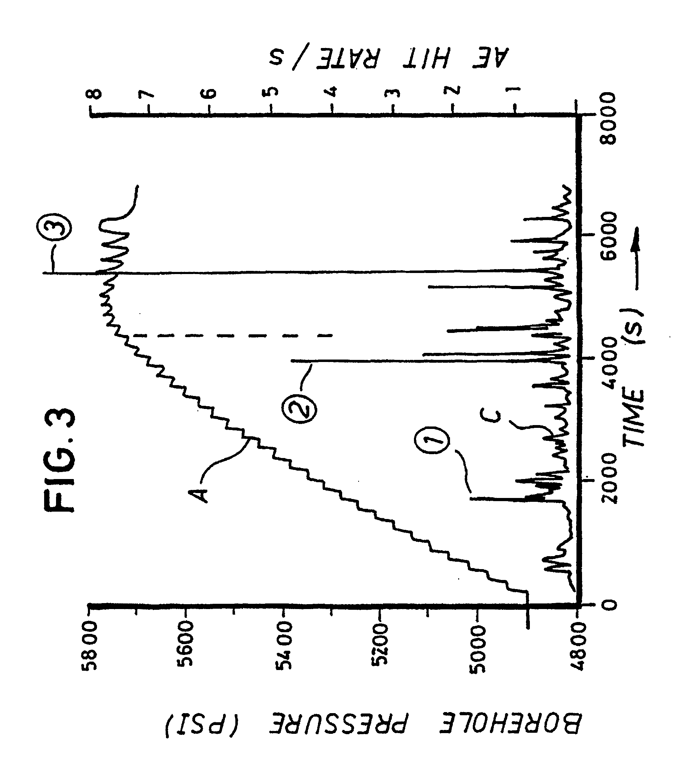

From these characteristics several parameters could be determined, the most important ones being the cumulative hits as a function of time and the hit rate. Diagrams of these parameters are shown in Figs. 2 and 3, in which line A in Figs. 2 and 3 indicates the pressure variation, line B in Fig. 2 indicates the cumulative acoustic emission hits and line C in Fig. 3 indicates the acoustic emission hit rate. The cumulative hits variation line suggests a rather constant acoustic emission hit rate throughout the test. However, line C in Fig. 3 indicates that there are some regions of increased acoustic hit rate.

The first region, occurring at approximately 2000 s, corresponds to a very slight increase in the pressure drop during shut-in (5-7 psi compared to 0-3 psi in previous incremental steps), although this region cannot be related to any significant phenomenon since the pressure level is still relatively low. The second region of increased acoustic hit rate occurred at approximately 4000 s. This region coincided with an increased pressure drop during shut-in of about 7-9 psi. Analysis of the pressure record indicated that the second region of increased acoustic hit rate corresponded to the onset of damage to the rock formation shortly before the leak off pressure was reached. Thus this second region of increased acoustic hit rate provides an early indication of the fluid leak-off point.

A third region of increased acoustic hit rate occurred approximately at 5500 s. The third region was an order of magnitude higher than the previous regions, and coincided exactly with formation break-down. Thus, the third region provides an exact indication of formation break-down.

After formation break-down the formation fracture was propagated further. During this stage the level of acoustic emission activity remained at a relatively low level, which was attributed to attenuation effects due to selective absorption of high frequencies as the distance between the acoustic source (i.e. the fracture front) and the sensor increased.

Regions of intense acoustic emission have been indicated in Fig. 3 by reference signs 1, 2 and 3.

## Claims

1. A method of determining a characteristic of a material selected from rock formation and cement, said material surrounding a borehole containing a fluid, the method comprising:
- positioning an acoustic sensor at a selected position in the borehole, the acoustic sensor being suitable to provide signals representing acoustic emission from said material;
- applying a selected pressure to the fluid thereby inducing mechanical stresses in said material, said stresses inducing acoustic emission from said material;
- inducing the sensor to detect the acoustic emission and to provide a signal representing the acoustic emission; and
- determining the characteristic from said signal and from the pressure applied to the fluid, wherein said selected pressure is applied to the fluid in the course of a leak-off test whereby fluid is pumped into the borehole and the time evolution of the pressure in the borehole is monitored during and after pumping, and wherein the selected pressure forms the leak-off pressure defined as the pressure at which a plot of the wellhead pressure versus injected fluid volume becomes non-linear, **characterized in that** said acoustic sensor is positioned in an open lower part of the borehole so as to determine said characteristic of the material surrounding said open lower part of the borehole.

2. The method of claim 1, wherein said characteristic forms a mechanical characteristic which is used to assess whether or not the material is cracked.

3. The method of claim 1 or 2, wherein said characteristic forms at least one of the group of parameters including the rock strength, the rock type, the rock porosity, the formation leak-off pressure, the formation break-down pressure and an in-situ rock stress.

4. The method of claim 1, when applied during drilling of the borehole and wherein the remaining upper part of the borehole is provided with a casing.

5. The method of any of claims 1-4, wherein the step of determining the characteristic from said signal comprises determining said characteristic from at least one of the amplitude of the signal, the energy of the signal, the duration of the signal and the number of times the signal exceeds a selected threshold.

6. The method of any of claims 1-5, comprising the further step of storing the selected signal and a record of the fluid pressure as a function of time, and wherein the characteristic is determined from a comparison between the stored signal and the fluid pressure as a function of time.

## Patentansprüche

1. Verfahren zum Bestimmen eines charakteristischen Merkmales eines Materiales, das ausgewählt ist unter Gesteinsformation und Zement, welches Material ein Bohrloch umgibt, das ein Fluid enthält, wobei das Verfahren umfaßt:
- Positionieren eines akustischen Sensors an einer ausgewählten Position im Bohrloch, wobei der akustische Sensor Signale liefern kann, welche die akustische Emission aus dem Material repräsentieren;
- Aufbringen eines ausgewählten Druckes auf das Fluid, um dadurch mechanische Beanspruchungen in dem Material hervorzurufen, welche Beanspruchungen eine akustische Emission aus dem Material hervorrufen;
- Veranlassen, daß der Sensor die akustische Emission detektiert und ein die akustische Emission repräsentierendes Signal liefert; und
- Bestimmen des charakteristischen Merkmales aus dem Signal und aus dem auf das Fluid aufgebrachten Druck, wobei der ausgewählte Druck auf das Fluid im Verlauf eines Lecktests aufgebracht wird, bei welchem Fluid in das Bohrloch gepumpt wird und die zeitliche Entwicklung des Druckes im Bohrloch während des und nach dem Pumpen(s) überwacht wird, und wobei der ausgewählte Druck den Ausleckdruck bildet, welcher als jener Druck definiert ist, bei welchem das Diagramm des Bohrlochkopfdruckes über dem eingespritzten Fluidvolumen nichtlinear wird, **dadurch gekennzeichnet, daß** der akustische Sensor in einem offenen unteren Teil des Bohrloches liegt, um das charakteristische Merkmal des diesen offenen unteren Teil des Bohrloches umgebenden Materiales zu bestimmen.

2. Verfahren nach Anspruch 1, bei welchem das charakteristische Merkmal ein mechanisches charakteristisches Merkmal bildet, das dazu verwendet wird, zu bestimmen, ob das Material Sprünge aufweist oder nicht.

3. Verfahren nach Anspruch 1 oder 2, bei welchem das charakteristische Merkmal zumindest einen Parameter aus der Gruppe umfassend Gesteinsfestigkeit, Gesteinstype, Gesteinsporosität, Formationsausleckdruck, Formationszusammenbruchdruck und in-situ-Gesteinsbeanspruchung bildet.

4. Verfahren nach Anspruch 1, welches während des Bohrens des Bohrloches durchgeführt wird und wobei der restliche obere Teil des Bohrloches mit einer Einfassung versehen ist.

5. Verfahren nach einem der Ansprüche 1 bis 4, bei welchem der Schritt des Bestimmens des charakteristischen Merkmales aus dem genannten Signal das Bestimmen des charakteristischen Merkmales aus zumindest einem der Werte Signalamplitude, Signalenergie, Signaldauer und Anzahl der Male, zu welchen das Signal einen ausgewählten Schwellwert überschreitet, umfaßt.

6. Verfahren nach einem der Ansprüche 1 bis 5, umfassend den weiteren Schritt des Speicherns des ausgewählten Signales und einer Aufzeichnung des Fluiddruckes als Funktion der Zeit, wobei das charakteristische Merkmal aus einem Vergleich zwischen dem gespeicherten Signal und dem Fluiddruck als Funktion der Zeit bestimmt wird.

## Revendications

1. Procédé de détermination d'une caractéristique d'un matériau sélectionné parmi une formation rocheuse et du ciment, ledit matériau entourant un trou de forage contenant un fluide, le procédé comportant les étapes consistant à:
- placer un détecteur acoustique en une position sélectionnée dans le trou foré, le détecteur acoustique convenant pour délivrer des signaux représentant l'émission acoustique en provenance dudit matériau;
- appliquer une pression sélectionnée au fluide, pour ainsi induire les contraintes mécaniques dans ledit matériau, lesdites contraintes induisant une émission acoustique par ledit matériau;
- induire le capteur à détecter l'émission acoustique et à délivrer un signal représentant l'émission acoustique; et
- déterminer la caractéristique à partir dudit signal et de la pression appliquée au fluide,
dans lequel ladite pression sélectionnée est appliquée au fluide au cours d'un test de fuite dans lequel le fluide est pompé dans le trou de forage et l'évolution temporelle de la pression dans le trou de forage est surveillée pendant et après le pompage, la pression sélectionnée formant la pression de fuite définie comme étant la pression à laquelle un graphique de la pression en tête de puits en fonction du volume de fluide injecté devient non linéaire,
**caractérisé en ce que** ledit détecteur acoustique est placé dans une partie inférieure ouverte du trou de forage de manière à déterminer ladite caractéristique du matériau entourant ladite partie inférieure ouverte du trou de forage.

2. Procédé selon la revendication 1, dans lequel ladite caractéristique forme une caractéristique mécanique qui est utilisée pour déterminer si le matériau est ou non fissuré.

3. Procédé selon la revendication 1 ou 2, dans lequel ladite caractéristique forme au moins un paramètre du groupe comprenant la résistance mécanique de la roche, le type de roche, la porosité de la roche, la pression des fuites de la formation, la pression de rupture de la formation et une contrainte in situ de la roche.

4. Procédé selon la revendication 1, appliqué pendant le forage du trou de forage et dans lequel la partie supérieure restante du trou de forage est dotée d'un cuvelage.

5. Procédé selon l'une quelconque des revendications 1 à 4, dans lequel l'étape de détermination de la caractéristique à partir dudit signal comprend la détermination de ladite caractéristique au moins à partir de l'amplitude du signal, de l'énergie du signal, de la durée du signal ou du nombre de fois que le signal dépasse un seuil sélectionné.

6. Procédé selon l'une quelconque des revendications 1 à 5, comprenant l'étape supplémentaire consistant à conserver le signal sélectionné et un enregistrement de la pression du fluide en fonction du temps, et dans lequel la caractéristique est déterminée à partir d'une comparaison entre le signal conservé et la pression du fluide en fonction du temps.
